# DEMANDE DE BREVET EUROPEEN

(11) **EP 2 279 710 A1**
(43) Date de publication de la demande: **02.02.2011**
(21) Numéro de dépôt: 10170312.2
(22) Date de dépôt: 21.07.2010
(51) Int. Cl.: A61C 8/00

(54) **Dispositif de conditionnement pour implant dentaire**

(30) Priorité: 27.07.2009 FR 0955226
(71) Demandeur: Luponax Plastic, 01100 Arbent (FR)
(72) Inventeur: Berthonneau, Olivier, 01500, AMBERIEU EN BUGEY (FR); Lecomte, Alain, 01580, MATAFELON GRANGES (FR)
(74) Mandataire: Maureau, Philippe

(57) **Abrégé**

La présente invention a pour objet un dispositif (1) de conditionnement, de manipulation ou de transport pour implant dentaire (6) comportant une enveloppe (7) de protection, et un support implant (3) s'étendant à l'intérieur de l'enveloppe (7) de protection, **caractérisé en ce que** le support implant (3) comporte des moyens de maintien (4) élastiques de l'implant (6) comportant des zones de contact avec l'implant dentaire (6) réalisées en matériau implantable, les moyens de maintien (4) élastiques présentant des portions (40) en forme d'ailette avec une extrémité fixe et une extrémité libre.

## Description

La présente invention a pour objet un dispositif de conditionnement, manipulation ou de transport pour implant dentaire.

Les implants dentaires sont couramment utilisés en implantologie pour remplacer artificiellement des racines de dent abîmées ou arrachées.

Un implant est ancré sur l'os de la mâchoire afin d'être utilisé comme support stable à une prothèse dentaire. L'implant dentaire est donc la pièce intermédiaire qui transmet la force de mastication exercée par la mâchoire à la prothèse. Il est généralement réalisé en titane et sa durabilité dépasse largement celle de la longévité humaine.

Cependant, la phase d'implantation est une intervention chirurgicale invasive des gencives venant mettre un corps étranger constitué par l'implant, au contact de la circulation sanguine, ce qui induit un risque d'infection bactérienne pouvant conduire à la contraction d'une maladie nosocomiale.

Il est donc très important que durant son implantation, l'implant soit exempt de toute contamination.

Cette contamination est dans la plupart des cas provoquée par sa manipulation ou bien par sa mise en contact avec des matériaux non implantables lors de son conditionnement de stockage ou bien de transport.

Les dispositifs de conditionnement existants ont des dates de péremption pouvant aller de moins d'un mois à trois années suivant le procédé de stérilisation

La présente invention a pour but de résoudre tout ou partie de ces inconvénients en proposant un nouveau dispositif de conditionnement, manipulation ou de transport pour implant dentaire.

A cet effet, la présente invention a pour objet un dispositif de conditionnement, de manipulation ou de transport pour implant dentaire comportant une enveloppe de protection, et un support implant s'étendant à l'intérieur de l'enveloppe de protection, caractérisé en ce que le support implant comporte des moyens de maintien élastiques de l'implant comportant des zones de contact avec l'implant dentaire réalisées en matériau implantable, les moyens de maintien élastiques présentant des portions en forme d'ailette avec une extrémité fixe et une extrémité libre.

Cette disposition permet de transporter et de conserver un implant dentaire hors de toute contamination durant une période de plus d'un mois et permet un bon maitien de l'implant sans nécessiter de manipulation des moyens de maintien. En effet, les frottements entre les moyens de maintien en matériau implantable et l'implant, pouvant survenir durant le transport, ne contamineront pas l'implant par ajout de matière non implantable. De plus la manipulation de l'implant n'a lieu qu'au dernier moment confortant ainsi l'asepsie de l'implant.

Selon un mode de réalisation, les moyens de maintien élastiques comportent une portion formant un corps extrudé sous la forme d'un tube rond, rectangulaire ou carré.

Selon un mode de réalisation, les directions des plans prises par les extrémités libre des portions en forme d'ailette se croisent en un axe qui correspond sensiblement à l'axe de symétrie du corps en forme de tube rond, rectangulaire ou carré.

Selon un mode de réalisation, les directions des plans prises par les extrémités libre des portions en forme d'ailette sont décalées par rapport à l'axe de symétrie du corps en forme de tube rond, rectangulaire ou carré.

Selon un mode de réalisation, les portions en forme d'ailette présentent une forme profilée en arc de cercle.

Cette disposition permet à l'utilisateur de saisir facilement l'implant une fois l'enveloppe retirée de sa base.

Selon un mode de réalisation, les portions en forme d'ailette présentent une forme plane.

Selon un mode de réalisation, les zones de contact avec l'implant correspondent à l'extrémité libre des portions en forme d'ailette.

Cette disposition permet de réduire les surfaces des zones de contact avec l'implant.

Selon un mode de réalisation, les moyens de maintien élastiques comportent une zone d'insertion et de retrait dépourvue d'angle saillant.

Cette disposition facilite le retrait et la mise en place de l'implant sans risquer de l'endommager.

Avantageusement, les portions en forme d'ailette présentent une partie de longueur radiale croissante depuis la zone d'insertion et de retrait de l'implant dentaire.

Cette disposition facilite l'insertion et le retrait de l'implant.

Selon un mode de réalisation, le support implant comporte des moyens de fixation pour les moyens de maintien élastiques de l'implant.

Selon un mode de réalisation, les moyens de maintien élastiques de l'implant sont désolidarisables de ses moyens de fixation.

Selon un mode de réalisation, le support implant comporte un moyen de fixation pour une vis de cicatrisation ou un outil de mise en place correspondant à l'implant.

Cette disposition permet de profiter de l'espace libre à l'intérieur de l'enveloppe pour y disposer la vis de cicatrisation posée la plupart du temps en même temps que l'implant en attente de la cicatrisation des tissus et de la pose de la prothèse, ou pour y disposer d'un outil de mise en place de l'implant qui lui est généralement spécifique.

Selon un mode de réalisation, les moyens de maintien élastiques assurent le maintien d'un implant de diamètre allant jusqu'à 7 mm.

Cette disposition permet d'utiliser le dispositif pour la plupart des modèles d'implants.

Selon un mode de réalisation, les matériaux constituant le dispositif permettent une stérilisation par vapeur et/ou rayons gamma.

Cette disposition permet une stérilisation de l'implant en même temps que le dispositif lui-même et ne nécessite donc pas de manipulation de l'implant lors de la phase de stérilisation.

Selon un mode de réalisation, le matériau implantable est le même que le matériau de l'implant.

Cette disposition confère une même dureté aux matériaux constituant les moyens de maintien élastiques et l'implant ce qui permet de limiter les actions mécaniques réciproques d'un matériau sur l'autre lors du transport.

Le dispositif comprend également des moyens de verrouillage/déverrouillage complémentaires, agencés à proximité de l'extrémité ouverte de l'enveloppe et sur la base support afin de verrouiller/déverrouiller l'enveloppe sur ladite base support, ces moyens de verrouillage/déverrouillage complémentaires étant constitués par un système par clipsage dur ou par un système dit un quart de tour.

Cette disposition permet un bon isolement de l'implant de l'extérieur lorsque l'enveloppe est verrouillée sur sa base support tout en permettant un accès facile à l'implant par l'ouverture de l'enveloppe sur sa base support.

De plus, la base support peut comporter d'autres moyens de verrouillage/déverrouillage destinés à coopérer avec des moyens complémentaires de verrouillage/déverrouillage agencés sur la paroi intérieure d'un suremballage de préférence en forme de tube cylindrique destiné à renfermé l'ensemble comprenant l'enveloppe et la base support.

Cette disposition permet d'adjoindre un niveau de protection supplémentaire contre la contamination de l'implant.

D'autres caractéristiques et avantages de l'invention ressortiront de la description détaillée ci-après, prises en liaison avec des dessins qui illustrent, à titre d'exemple, les principes de l'invention.
La figure 1 montre une vue en coupe partielle d'une partie du dispositif de conditionnement selon un premier mode de réalisation de l'invention.
La figure 2a illustre le profil d'une partie des moyens de maintien de l'implant selon le mode de réalisation présenté à la figure 1.
La figure 2b illustre le profil d'une partie des moyens de maintien de l'implant selon une variante du mode de réalisation illustré à la figure 2a.
La figure 3a illustre le profil d'une partie des moyens de maintien de l'implant selon un second mode de réalisation.
La figure 3b illustre le profil d'une partie des moyens de maintien de l'implant selon une variante du mode de réalisation illustré à la figure 3a.
La figure 4a illustre le profil d'une partie des moyens de maintien de l'implant selon un second mode de réalisation.
La figure 4b illustre le profil d'une partie des moyens de maintien de l'implant selon une variante du mode de réalisation illustré à la figure 4a.
La figure 5 illustre le dispositif de conditionnement équipé d'un suremballage selon l'invention.

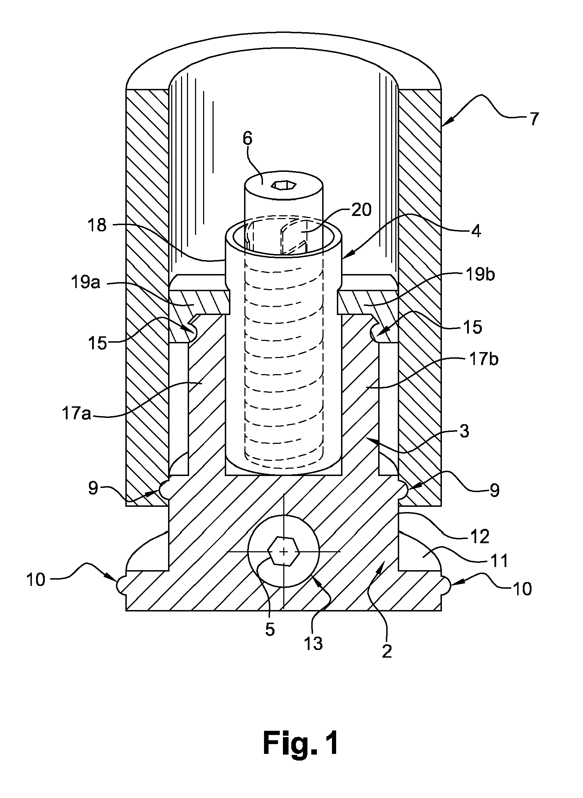

Comme illustré à la figure 1 , le dispositif 1 selon l'invention comporte une base support 2 sur lequel est disposé un support implant 3.

La base support 2 est constituée de deux portions cylindriques 11, 12 de rayons différents et centrées l'une sur l'autre.

La portion 11 de rayon supérieur définit la portion vers le bas de la base support 2 tandis que la portion 12 de rayon inférieur définie la portion dirigée vers le haut de la base support 2.

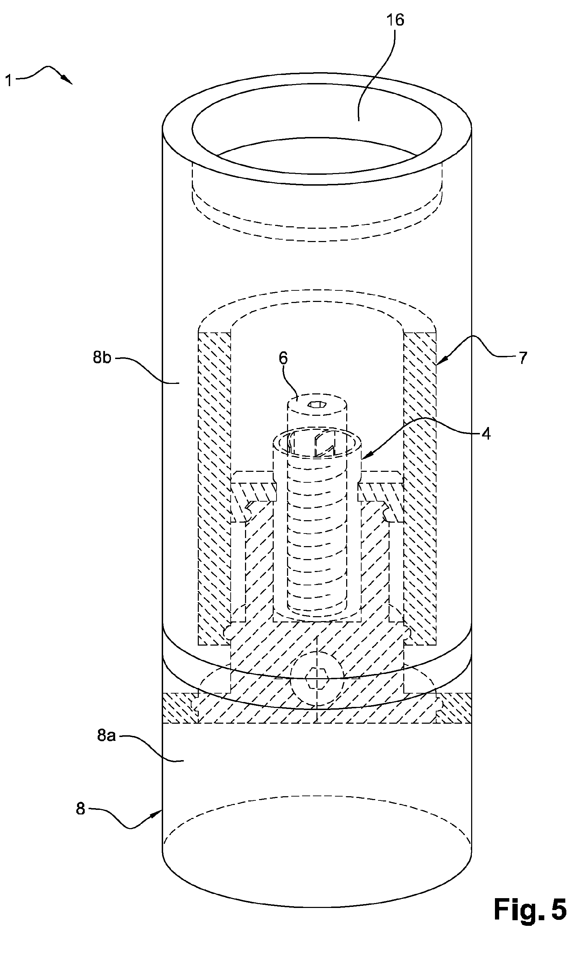

La portion basse 11 comporte sur sa périphérie une première partie de moyens de verrouillage/déverrouillage 10 destinés à coopérer avec une seconde partie de ces moyens de verrouillage/déverrouillage 10 de forme complémentaires agencés sur la paroi intérieure d'un suremballage 8 visible à la figure 5.

Ces moyens de verrouillage/déverrouillage 10 peuvent être constitués par un système par clipsage dur avec des portions de formes complémentaires ou bien par un système dit un quart de tour.

La portion haute 12 comporte sur sa périphérie une première partie de moyens de verrouillage/déverrouillage 9 destinés à coopérer avec une seconde partie de ces moyens de verrouillage/déverrouillage 9 de forme complémentaires agencés sur la paroi intérieure d'une enveloppe 7 en forme de tube visible aux figures 1 et 5.

Les portions haute 12 et basse 11 comportent un porte vis 13 ménagé dans l'épaisseur de leur face latérale. Ce porte vis 13 a ici une forme cylindrique creuse apte à recevoir une vis 5.

Sans sortir du cadre de l'invention, ce porte vis 13 peut être remplacé par un porte outil utilisable pour la mise en place d'un implant 6.

Il est bien entendu que l'intérieur de ces deux portions 11, 12 peut être creux dans la mesure où cela ne modifie pas la fonction de support de la base support 2 pouvant se maintenir à plat sur sa portion basse 11 sur une surface plan et que la portion haute 12 verrouille le passage entre l'intérieur et l'extérieur lorsque le dispositif 1 est en position verrouillée.

Sur la surface exposée de la portion haute 12, il est disposé le support implant 3.

Ce support implant 3 est fixé solidairement à la portion haute 12 du support base 2 par tous moyens connus.

En particulier, le support de base 2 et le support implant 3 peuvent être réalisé en matière plastique en une seule pièce issue de moulage comme illustré aux figures 1 et 5 ou en deux pièces distinctes solidarisés par thermocollage.

La base support 2 supporte un support implant 3 comportant au moins deux branches 17a, 17b s'étendant sensiblement transversalement à la surface exposée de la portion haute 12.

Ces branches 17a, 17b sont inscrites à l'intérieur du cercle de diamètre égal à celui de la portion cylindrique haute 12 de la base support 2.

Ces branches 17a, 17b supportent des moyens de maintien 4 de l'implant 6.

L'enveloppe 7 vient recouvrir l'ensemble du support implant 3, des moyens de maintien 4 ainsi qu'une partie de la base support 2 à laquelle elle vient se rattacher.

Dans un premier mode de réalisation, ces moyens de maintien 4 comportent une portion formant un corps 18 extrudé sous la forme d'un tube rond fermé sur sa partie basse et ouvert sur sa partie haute.

Ce corps 18 comporte deux bras de maintien 19a, 19b en forme de « L » raccordés par la tête du « L » à la surface extérieure du corps 18 et s'étendant sensiblement transversalement à celle-ci.

Les bases des bras 19a, 19b en forme de « L » sont élastiques et orientées vers le bas.

Chaque branche 17a, 17b du support implant 3 comporte sur sa périphérie une première partie de moyens de verrouillage/déverrouillage 15 destinés à coopérer avec une seconde partie de ces moyens de verrouillage/déverrouillage 15 de forme complémentaires agencés sur l'extrémité de chacune des bases des bras 19a, 19b en forme de « L ».

Cette complémentarité de forme combinée à l'élasticité des bases des bras en forme de « L » réalise ainsi un moyen de fixation réversible du moyen de maintien 4 sur le support implant 3.

La surface extérieure de chaque extrémité haute de chacune des branches 17a, 17b est biseautée afin de faciliter le verrouillage/déverrouillage des moyens de maintien 4 sur le support implant 3.

L'encombrement latéral total des branches 17a, 17b avec les bras 19a, 19b est prévu pour ne pas gêner la pose et la dépose de l'enveloppe 7 lorsque les moyens de maintien 4 sont mis en place sur les deux branches 17a, 17b du support implant 3.

De la même manière, la hauteur des deux branches 17a, 17b, des moyens de maintien 4 ainsi que de l'enveloppe 7 est prévu de telle sorte à pouvoir accepter des implant 6 de tailles différentes.

L'intérieur du corps 18 comporte une pluralité d'ailettes élastiques 20.

Chaque ailette 20 comporte d'une part une extrémité fixe 21 la raccordant sensiblement sur toute sa hauteur à la surface intérieure du corps 18, et d'autre part une extrémité libre 22 plus élastique destiné à venir au contact de l'implant 6.

Ces ailettes élastiques 20 ou tout au moins leur extrémité libre 22 sont réalisées en un matériau implantable, comme par exemple du titane.

L'implant 6 est disposé et maintenu entre ces ailettes élastiques 20 par l'action de la déformation par l'implant de ces ailettes élastiques 20 qui tendent à vouloir retrouver leur forme initiale de repos.

L'espace entre l'extrémité libre 22 des différentes ailettes définie ainsi une zone d'insertion et de retrait pour l'implant 6.

L'élasticité des ailettes 20 permet de maintenir en position des implants 6 ayant un diamètre allant jusqu'à au moins 7 mm.

L'orientation et la forme de ces ailettes élastiques 20 ainsi que la forme du corps 18 peut varier d'un mode de réalisation à l'autre.

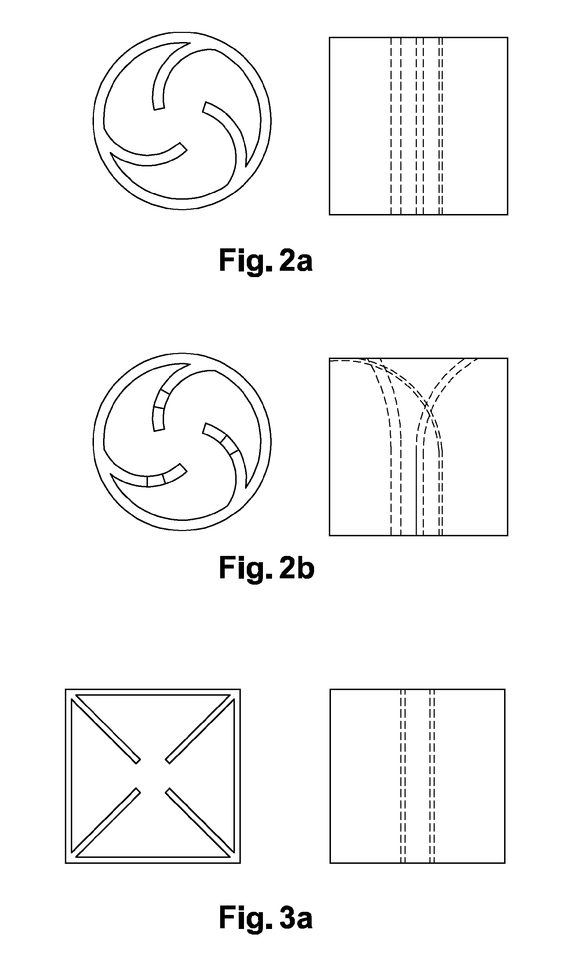

Ainsi, les figures 1, 2a et 2b illustrent des modes de réalisation avec un corps 18 extrudé sous la forme d'un tube rond, et les figures 3a à 4b illustrent des modes de réalisation avec un corps 18 extrudé sous la forme d'un tube carré.

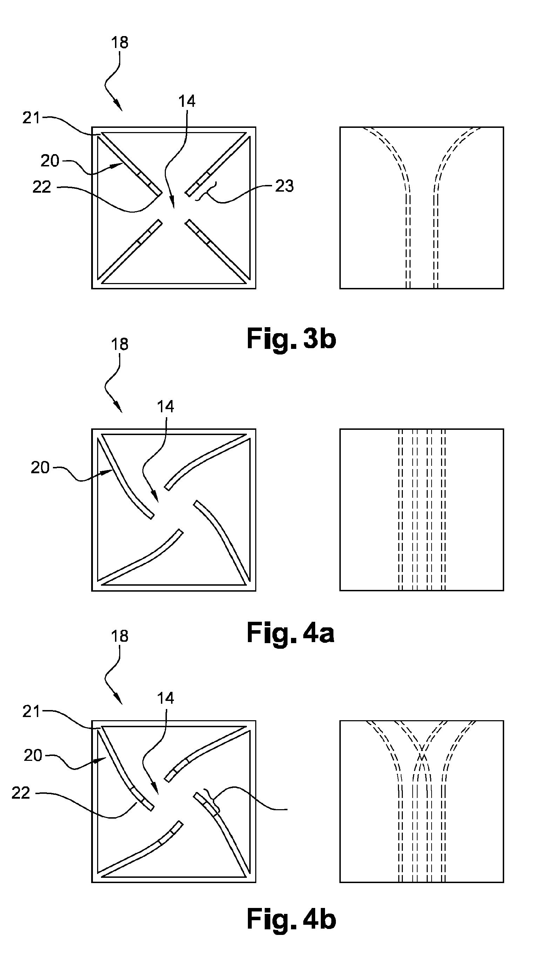

Selon des modes de réalisation particuliers illustrés aux figures 1, 2a, 2b, 4a et 4b, les directions des plans prises par les extrémités libre 22 des ailettes 20 sont décalées par rapport à l'axe de symétrie du corps 18 en forme de tube rond correspondant aux figures 1, 2a, 2b ou carré correspondant aux figures 4a, 4b.

Selon une variante de ces modes de réalisation illustré aux figures 2b et 4b, les ailettes 20 présentent une partie 23 de longueur radiale croissante depuis la zone d'insertion et de retrait 14 de l'implant dentaire 6.

Selon encore d'autres modes de réalisation illustrés aux figures 3a et 3b, les directions des plans prises par les extrémités libre 22 des ailettes 20 se croisent en un axe qui correspond sensiblement à l'axe de symétrie du corps 18 en forme de tube carré dans l'exemple présenté.

Dans le mode de réalisation présenté à la figure 3b, les ailettes 20 présentent une partie 23 de longueur radiale croissante depuis la zone d'insertion et de retrait 14 de l'implant dentaire 6.

La figure 5 illustre la mise en place d'un suremballage 8 renfermant l'enveloppe 7 verrouillée sur la base support 2.

Ce suremballage 8 est en deux parties, une partie basse formant une base 8a et une partie haute 8b protégeant l'ensemble de l'enveloppe 7 et de la base support 2.

Ces deux parties 8a, 8b sont de forme cylindrique.

La paroi intérieure de la partie 8a comprend la seconde partie des moyens de verrouillage/déverrouillage 10 dont la première partie est disposé sur la périphérie de la portion cylindrique 11 de la base support 2.

Cette seconde partie des moyens de verrouillage/déverrouillage 10 sont disposés sur la partie basse 8a du suremballage 8 de manière à ce qu'une fois verrouillé, l'ensemble de l'enveloppe 7 et de la base support 2 soit enfermé à l'intérieur du suremballage 8 en particulier par sa partie haute 8b.

A cet effet, la base 8a comporte sur sa périphérie une première partie de moyens de verrouillage/déverrouillage destinés à coopérer avec une seconde partie de ces moyens de verrouillage/déverrouillage de forme complémentaires agencés sur l'extrémité de la paroi intérieure de la partie haute 8b du suremballage 8.

Ces moyens de verrouillage peuvent sans limitation être ici constitués par un système de clipsage dur.

La partie haute 8b du suremballage 8 cylindrique est fermée en son sommet par un bouchon 16 en matière plastique et positionné en force à l'intérieur de celle-ci.

Ainsi, lors du transport et du conditionnement d'un implant 6, celui-ci se trouvera hors de porté de toute source de contamination et sera solidement maintenu à l'intérieur du dispositif 1.

En outre, une décontamination par vapeur ou par rayon gamma peut être envisagée sans qu'il ne soit nécessaire de retirer l'implant 6 de l'intérieur du dispositif de conditionnement 1.

A la suite d'une commande, le chirurgien orthodontiste reçoit l'implant à l'intérieur de son dispositif de conditionnement 1. Il peut alors stocker celui-ci durant une période supérieure à celle que permettaient les dispositifs de l'état de la technique, lui laissant ainsi plus de marge dans l'organisation de ses rendez-vous.

Lors de son utilisation, le chirurgien commence par retirer la partie haute 8b du suremballage 8.

Une étiquette de contrôle (non représentée) peut judicieusement être collée sur la paroi du suremballage 8 afin de servir de témoin d'ouverture.

Il accède ainsi à l'ensemble de l'enveloppe 7 et de la base support 2.

Il dépose ensuite l'enveloppe 7 pour accéder à l'implant 6.

Pour extraire l'implant 6, il n'a qu'à exécuter un mouvement rotatif vers le haut dans le sens du dévissage de l'implant 6 pour l'extraire de ses moyens de maintien 4 te en particulier de ces ailettes 20.

De même, il peut retirer de son support 13 la vis de cicatrisation 5 au cours de l'opération, une fois l'implant 6 posé.

Comme il va de soi, l'invention ne se limite pas aux formes et mode de réalisations préférentiels décrits ci-dessus, à titre d'exemple non-limitatif ; elle en embrasse au contraire toutes les variantes. En particulier, les moyens de verrouillage/déverrouillage des pièces qu'ils solidarisent ne comptent pas forcément le même nombre et ne sont pas forcément disposés aux endroits et de la façon décrite ci-dessus, tous moyens assurant la même fonction pouvant être envisagés.

## Revendications

1. Dispositif (1) de conditionnement, de manipulation ou de transport pour implant dentaire (6) comportant une enveloppe (7) de protection, et un support implant (3) s'étendant à l'intérieur de l'enveloppe (7) de protection,
**caractérisé en ce que** le support implant (3) comporte des moyens de maintien (4) élastiques de l'implant (6) comportant des zones de contact avec l'implant dentaire (6) réalisées en matériau implantable, les moyens de maintien (4) élastiques présentant des portions (40) en forme d'ailette avec une extrémité fixe et une extrémité libre.

2. Dispositif (1) selon la revendication 1, dans lequel les moyens de maintien (4) élastiques comportent une portion formant un corps (38) extrudé sous la forme d'un tube rond, rectangulaire ou carré.

3. Dispositif (1) selon la revendication 2, dans lequel les directions des plans prises par les extrémités libre des portions (40) en forme d'ailette se croisent en un axe qui correspond sensiblement à l'axe de symétrie du corps (38) en forme de tube rond, rectangulaire ou carré.

4. Dispositif (1) selon la revendication 2, dans lequel les directions des plans prises par les extrémités libre des portions (40) en forme d'ailette sont décalées par rapport à l'axe de symétrie du corps (38) en forme de tube rond, rectangulaire ou carré.

5. Dispositif (1) selon l'une des revendications 1 à 4, dans lequel les portions (40) en forme d'ailette présentent une forme profilée en arc de cercle.

6. Dispositif (1) selon l'une des revendications 1 à 4, dans lequel les portions (40) en forme d'ailette présentent une forme plane.

7. Dispositif (1) selon l'une des revendications 1 à 6, dans lequel les zones de contact avec l'implant correspondent à l'extrémité libre des portions en forme d'ailette.

8. Dispositif selon l'une des revendications 1 à 7, dans lequel les moyens de maintien (4) élastiques comportent une zone d'insertion et de retrait dépourvue d'angle saillant.

9. Dispositif selon la revendication 8, dans lequel les portions (40) en forme d'ailette présentent une partie de longueur radiale croissante depuis la zone d'insertion et de retrait de l'implant dentaire (6).

10. Dispositif (1) selon l'une des revendications 1 à 9, dans lequel le support implant (3) comporte des moyens de fixation (41) pour les moyens de maintien (4) élastiques de l'implant (6).

11. Dispositif (1) selon la revendication 10, dans lequel les moyens de maintien (4) élastiques de l'implant (6) sont désolidarisables de ses moyens de fixation (41).

12. Dispositif (1) selon l'une des revendication 1 à 11, dans lequel le support implant (3) comporte un moyen de fixation (24) pour une vis de cicatrisation (5) ou un outil de mise en place correspondant à l'implant (6).

13. Dispositif (1) selon l'une des revendication 1 à 12, dans lequel les moyens de maintien (4) élastiques assurent le maintien d'un implant (6) de diamètre allant jusqu'à 7 mm.

14. Dispositif (1) selon l'une des revendication 1 à 13, dans lequel les matériaux constituant le dispositif (1) permettent une stérilisation par vapeur et/ou rayons gamma.

15. Dispositif (1) selon l'une des revendication 1 à 14, dans lequel le matériau implantable est le même que le matériau de l'implant.
